# FASCICULE DE BREVET EUROPEEN

(11) **EP 2 783 166 B1**
(45) Date de publication et mention de la délivrance du brevet: **25.04.2018**
(21) Numéro de dépôt: 12795545.8
(22) Date de dépôt: 14.11.2012
(51) Int. Cl.: F15D 1/02, G05D 7/03, F24F 13/14, F16K 1/16, F16K 31/44, F16K 31/528

(54) **DISPOSITIF POUR AJUSTER UN DÉBIT D'AIR S'ÉCOULANT DANS UN CONDUIT AÉRAULIQUE**
EINRICHTUNG ZUM EINSTELLEN DER LUFTDURCHFLUSSMENGE INNERHALB EINES LUFTROHRES
DEVICE FOR ADJUSTING THE AIR FLOW RATE WITHIN AN AIR DUCT

(30) Priorité: 23.11.2011 FR 1160687
(43) Date de publication de la demande: 01.10.2014
(73) Titulaire: ALDES AERAULIQUE, 69200 Venissieux Cedex (FR)
(72) Inventeur: DAMIZET, Patrick, 42410 La Chapelle (FR)
(74) Mandataire: Chevalier, Renaud Philippe
(86) Numéro de dépôt international: PCT/FR2012/052625
(87) Numéro de publication internationale: WO 2013/076404

(56) Documents cités:
- FR-A1- 2 168 603
- FR-A1- 2 595 453
- GB-A- 1 154 235
- US-A- 4 018 159
- US-B1- 6 231 438

## Description

La présente invention concerne un dispositif pour ajuster un débit d'air s'écoulant dans un conduit aéraulique.

Ce dispositif trouve notamment application pour l'équipement d'une installation de ventilation mécanique contrôlée (VMC) ou de climatisation d'un local.

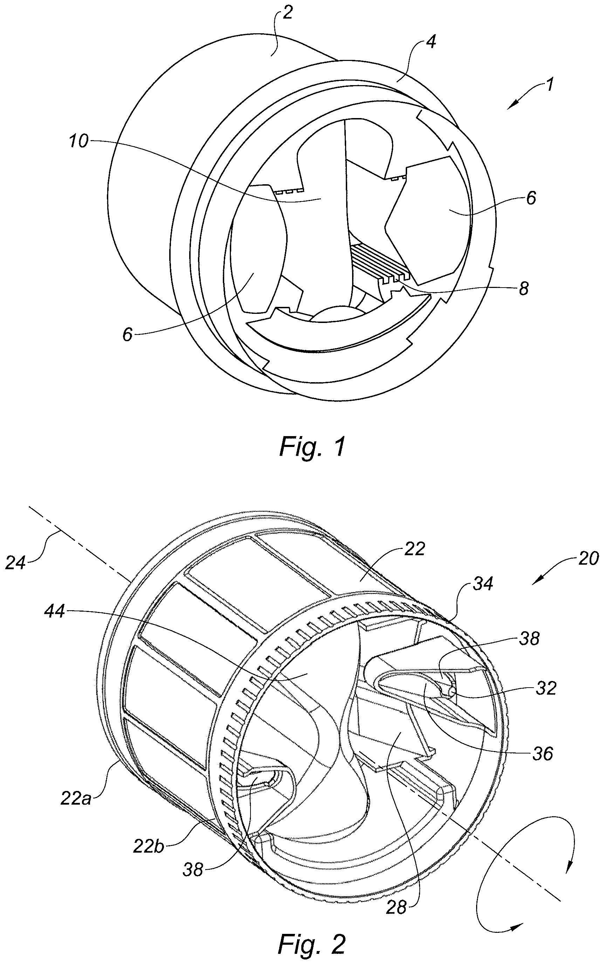

Un dispositif 1 pour ajuster un débit d'air s'écoulant dans un conduit aéraulique, connu de l'état de la technique, est représenté à la figure 1.

Ce dispositif 1 comporte un corps 2 tubulaire conçu pour être engagé en totalité à l'intérieur du conduit aéraulique.

Le dispositif 1 comporte un joint 4 monté sur le corps 2 pour assurer l'étanchéité entre le corps 2 et le conduit aéraulique.

Le dispositif 1 comporte des volets 6 prévus pour occuper une pluralité de positions à l'intérieur du corps 2 correspondant à une pluralité de sections de passage d'air. A cette fin, le corps 2 comprend des rainures 8 et les volets 6 comprennent des nervures de formes complémentaires agencées pour coulisser dans lesdites rainures 8.

Le dispositif 1 comporte enfin une chambre souple 10 adaptée pour se gonfler ou se dégonfler en fonction de la différence de pression entre des portions d'extrémité amont et aval du corps 2.

Lorsqu'un installateur désire ajuster le débit d'air s'écoulant dans le conduit aéraulique, celui-ci dégage les volets 6 hors du corps 2 par coulissement axial des nervures dans les rainures 8, déplace radialement les volets 6, puis réengage les volets 6 à l'intérieur du corps 2 par coulissement axial des nervures dans les rainures 8.

Le réglage du débit d'air s'écoulant dans le conduit aéraulique est ainsi fastidieux à mettre en oeuvre.

L'inconvénient est similaire pour le dispositif divulgué par le document US 6 231 438, qui comprend une bague pouvant pivoter autour d'un corps tubulaire pour entraîner une translation rectiligne d'un volet.

L'invention vise à remédier cet inconvénient.

L'invention concerne un dispositif pour ajuster un débit d'air s'écoulant dans un conduit aéraulique, comportant :
- un corps tubulaire s'étendant selon un axe, destiné à être fluidiquement raccordé au conduit aéraulique ;
- une bague montée pivotante sur une portion d'extrémité du corps autour de l'axe de ce corps;
caractérisé en ce qu'au moins un volet s'étend à l'intérieur du corps et est apte à pivoter autour d'un axe transversal à l'axe du corps, pour occuper une pluralité de positions correspondant à une pluralité de sections de passage d'air, chaque volet étant pourvu d'un moyen d'entrainement mâle, et la bague étant pourvue d'un moyen d'entrainement femelle, ou inversement,
le moyen d'entrainement mâle et le moyen d'entrainement femelle étant agencés de telle sorte qu'en réponse à un pivotement de la bague sur le corps, le moyen d'entrainement mâle coopère avec le moyen d'entrainement femelle pour modifier la position de chaque volet, et par suite la section de passage d'air.

Par exemple, chaque volet est pourvu du moyen d'entrainement mâle, et la bague est pourvue du moyen d'entrainement femelle.

Dans cette description, on entend par « axe transversal à l'axe du corps » un axe appartenant à un plan transversal à l'axe du corps.

Lorsqu'un installateur désire prérégler ou ajuster le débit d'air s'écoulant dans un conduit aéraulique équipé du dispositif selon l'invention, l'installateur entraine simplement la bague en rotation relativement au corps. En réponse, les moyens d'entrainement mâle et femelle coopèrent et déplacent chaque volet à l'intérieur du corps de manière à réduire ou accroitre la section de passage d'air.

Le réglage du débit d'air s'écoulant dans le conduit aéraulique, est ainsi simplifié.

Suivant une caractéristique, l'axe de pivotement de chaque volet s'étend au niveau une portion d'extrémité amont du corps, dans le sens d'écoulement d'air, et les moyens d'entrainement mâle et femelle sont disposés au niveau d'une portion d'extrémité aval.

De préférence, le moyen d'entrainement mâle comprend un doigt, le moyen d'entrainement femelle comprend une patte s'étendant dans un plan transversal à l'axe du corps et à travers laquelle est ménagée une lumière en C adaptée pour recevoir le doigt.

Un tel agencement permet de convertir le pivotement de la bague relativement au corps autour de l'axe de ce corps en un pivotement du volet à l'intérieur du corps autour de son axe de pivotement.

Avantageusement, la lumière présente deux portions d'extrémité conformées pour accueillir, et immobiliser, le doigt.

Un tel agencement permet de positionner et d'assurer le maintien en position du volet dans deux positions prédéterminées relativement au corps.

Dans sa forme d'exécution préférée, chaque volet vient de moulage avec le corps, et chaque volet présente un amincissement de matière définissant l'axe de pivotement de ce volet.

Dans ces conditions, la fabrication de chaque volet et du corps est réalisée conjointement par moulage. Le nombre d'éléments constituant le dispositif est limité et le procédé d'assemblage du dispositif est facilité.

Suivant une caractéristique, le corps est pourvu d'un organe d'encliquetage mâle et la bague est pourvue d'un organe d'encliquetage femelle, ou inversement, les organes d'encliquetage mâle et femelle étant conçus pour interdire la translation axiale de la bague sur le corps, et autoriser le pivotement de la bague sur le corps.

L'utilisation de tels organe d'encliquetage mâle et femelle permet de faciliter le montage, et en alternance le démontage, de la bague et du corps.

Avantageusement, la bague présente une face extérieure cannelée.

Dans ces conditions, la préhension et l'entrainement en rotation de la bague sont facilités.

De préférence, la bague présente un diamètre extérieur sensiblement égal au diamètre extérieur du corps, et de préférence un diamètre intérieur sensiblement égal au diamètre intérieur du corps.

Le dispositif peut alors être engagé dans sa totalité à l'intérieur d'un conduit aéraulique dont le diamètre intérieur est sensiblement égal au diamètre extérieur du corps et de la bague.

Enfin, dans sa forme d'exécution préférée, le dispositif comporte une chambre souple agencée pour se gonfler, ou se dégonfler, en fonction de la différence de pression entre les portions d'extrémité amont et aval du corps.

Une telle chambre souple permet de réguler le débit d'air s'écoulant dans le conduit aéraulique autour d'une valeur de consigne, quelque soit les perturbations aérauliques auxquelles est soumis le conduit.

L'invention sera mieux comprise à l'aide de la description qui suit en référence au dessin schématique annexé représentant, à titre d'exemple un dispositif pour ajuster un débit d'air s'écoulant dans un conduit aéraulique selon l'invention.
Figure 1 est une vue en perspective de trois-quarts avant d'un dispositif connu de l'état de la technique ;
Figure 2 est une vue en perspective de trois-quarts avant du dispositif selon l'invention ;
Figure 3 une vue partielle en perspective éclatée du dispositif de figure 2 ;
Figure 4 est une vue de dessus du dispositif de figure 2 dans laquelle des volets sont en position écartée ;
Figure 5 est une vue de dessus du dispositif de figure 2 dans laquelle les volets sont en position intermédiaire ;
Figure 6 est une vue de dessus du dispositif de figure 2 dans laquelle les volets sont en position rapprochée ;
Figure 7 est une vue de trois-quarts arrière du dispositif de figure 2;
Figure 8 est une vue de dessous du dispositif de figure 2 ;
Figure 9 est une coupe longitudinale selon la ligne A-A du dispositif de figure 2 ;
Figure 10 est une coupe transversale selon la ligne B-B du dispositif de figure 2 ; et
Figure 11 est une vue en perspective éclatée d'un organe de régulation du débit d'air du dispositif de figure 2.

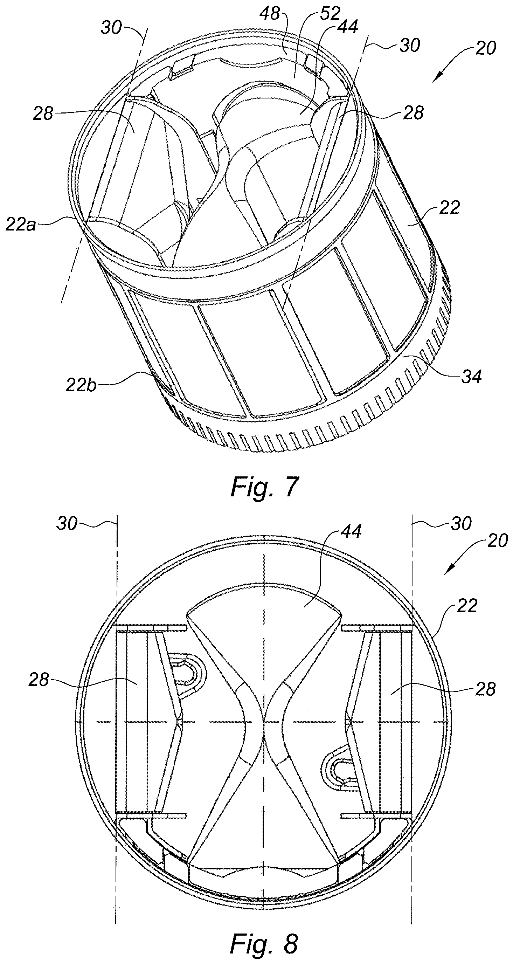

Les figures 2 à 10 représentent un dispositif 20 pour ajuster un débit d'air s'écoulant dans un conduit aéraulique (non représenté).

Le dispositif 20 comporte un corps 22 tubulaire s'étendant selon un axe 24. Le corps 22 est destiné à être fluidiquement raccordé audit conduit aéraulique. A cet effet, le corps 22 est par exemple engagé en partie ou en totalité dans le conduit aéraulique.

Le corps 22 présente une portion d'extrémité amont 22a et une portion d'extrémité aval 22b.

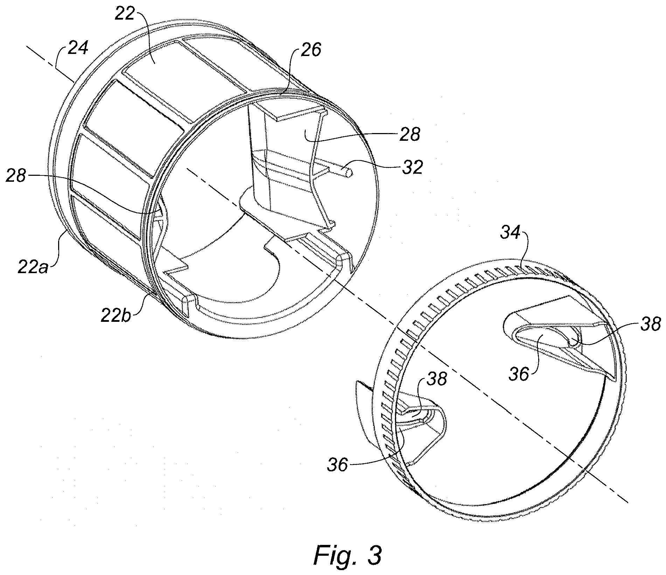

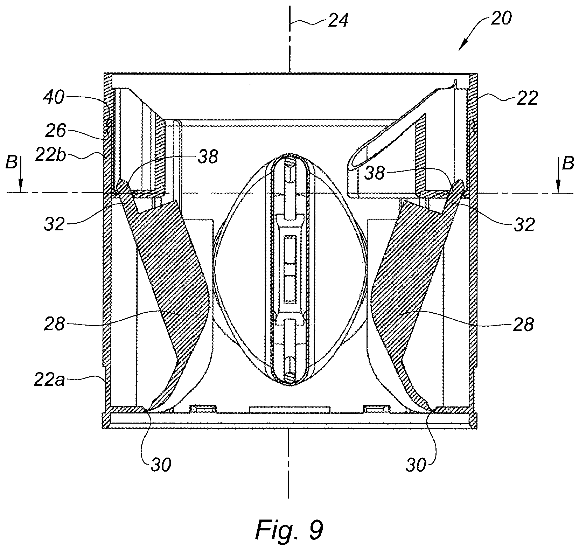

Le corps 22 est pourvu d'un organe d'encliquetage mâle 26 (représentés aux figures 3 et 9) ménagé sur la portion d'extrémité aval 22b. L'organe d'encliquetage mâle 26 prend ici la forme d'une saillie annulaire.

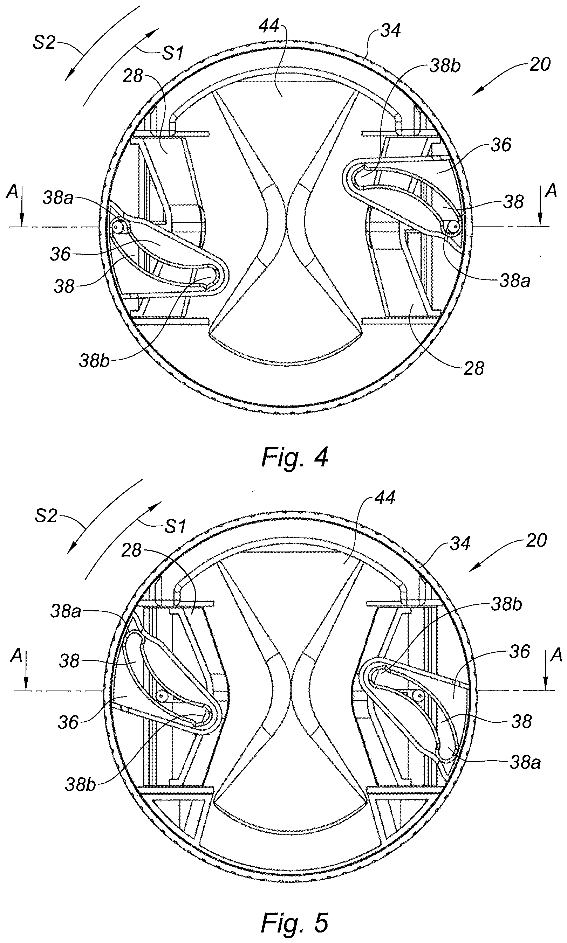

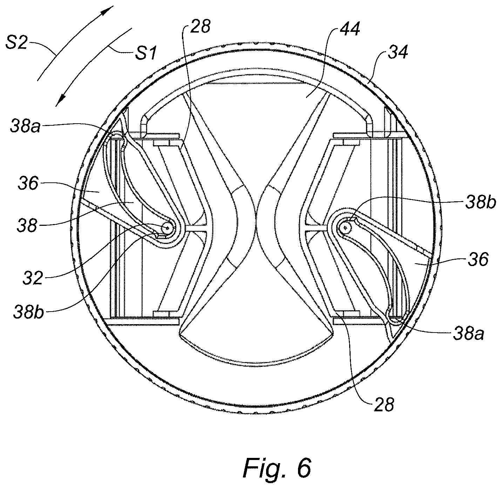

Le dispositif 20 comporte deux volets 28 s'étendant à l'intérieur du corps 2 et aptes à pivoter autour d'axes 30, de manière à occuper :
- une position écartée (représentée à la figure 4) ;
- une position intermédiaire (représentée à la figure 5) ; et
- une position rapprochée (représentée à la figure 6).

Les volets 28 viennent de moulage avec le corps 22 et présentent des amincissements de matière (représentés à la figure 9) définissant les axes 30. Ces axes 30 s'étendent au niveau de la portion d'extrémité amont 22a du corps 22 et sont transversaux à l'axe 24.

Les volets 28 sont pourvus de doigts 32 formant moyens d'entrainement mâles. Les doigts 32 sont disposés au niveau de la portion d'extrémité aval 22b.

Le dispositif 20 comporte une bague 34 montée pivotante sur la portion d'extrémité aval 22b du corps 22 autour de l'axe 24.

La bague 34 présente un diamètre extérieur sensiblement égal au diamètre extérieur du corps 22 et un diamètre intérieur sensiblement égal au diamètre intérieur du corps 22. La bague 34 présente une face extérieure cannelée

La bague 34 est pourvue de pattes 36 dans lesquelles sont ménagées des lumières 38 en C formant moyens d'entrainement femelles.

Les pattes 36 s'étendent au niveau de la portion d'extrémité aval 22a, dans un plan transversal à l'axe 24.

Les lumières 38 sont adaptées pour recevoir les doigts 32. Plus spécifiquement, les lumières 38 présentent une largeur légèrement supérieure à la largeur des doigts 32. Ainsi, le coulissement des doigts 32 dans les lumières 38, lorsque les volets 28 pivotent autour des axes 30, est rendu possible.

Les lumières 38 présentent deux portions d'extrémité 38a et 38b (représentées aux figures 4 à 6) conformées pour accueillir, et immobiliser, les doigts 32.

La bague 34 est pourvue d'un organe d'encliquetage femelle 40 (représenté à la figure 9). L'organe d'encliquetage femelle 40 prend ici la forme d'une rainure annulaire.

Les organes d'encliquetage mâle 26 et femelle 40 sont conçus pour interdire la translation axiale de la bague 34 sur le corps 22, et autoriser le pivotement de la bague 34 sur le corps 22.

Le dispositif 20 comporte enfin un organe de régulation 42 adapté pour réguler le débit d'air s'écoulant dans le corps 22 autour d'une valeur de consigne.

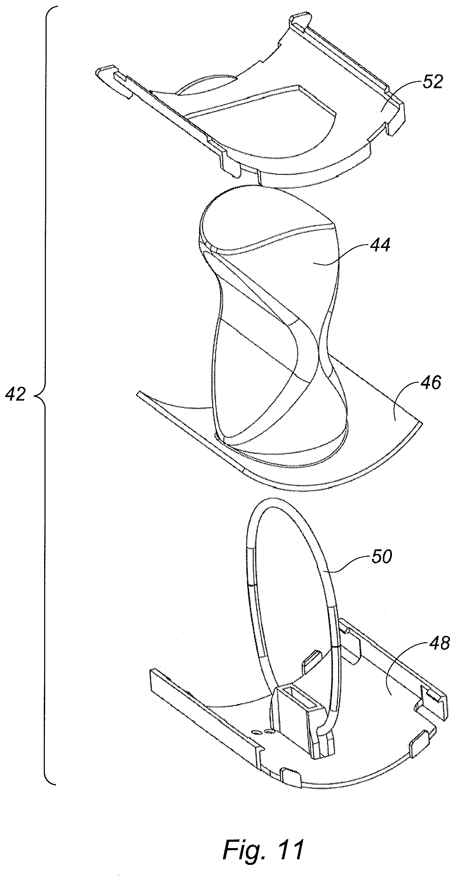

L'organe de régulation 42 (représenté à la figure 11) comprend une chambre souple 44 agencée pour se gonfler, ou se dégonfler, en fonction de la différence de pression entre les portions d'extrémité amont 22a et aval 22b du corps 22. La chambre souple 44 est montée sur une embase 46.

L'organe de régulation 42 comprend un support 48 sur lequel est fixée une armature 50 engagée à l'intérieur de la chambre souple 44.

L'organe de régulation 42 comprend enfin un capot 52 présentant une ouverture 54 à l'intérieur de laquelle est engagée la chambre souple 44.

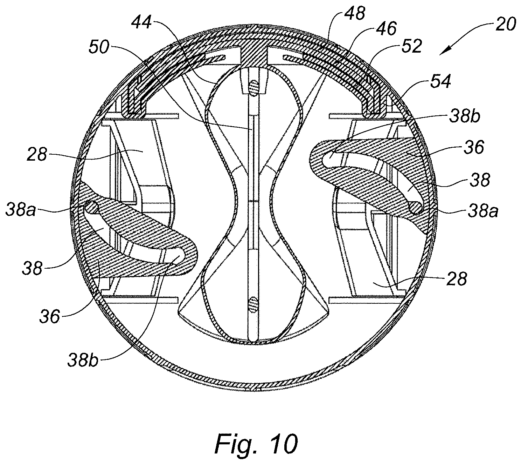

Le capot 52 et le support 48 enserrent l'embase 46. Le capot 52, le support 48 et l'embase 46 sont engagés dans un logement 54 (représenté à la figure 10) ménagé à l'intérieur du corps 22, de telle sorte que la chambre souple 44 s'étende radialement à l'intérieur du corps 22 entre les volets 28.

Un procédé d'utilisation du dispositif 20 est maintenant décrit en référence aux figures 4 à 6.

Initialement, la bague 34 est montée sur le corps 22 (tel que représenté à la figure 4). Les doigts 32 sont accueillis et immobilisés par les portions d'extrémité 38a des lumières 38. Les volets 28 sont en position écartée.

Lorsqu'un installateur souhaite réduire la section de passage d'air, et par suite le débit d'air s'écoulant dans le conduit aéraulique, celui-ci entraine la bague 34 en rotation autour de l'axe 24 dans un sens S1.

Les doigts 32 sont alors libérés par les portions d'extrémité 38a et coulissent à l'intérieur des lumières 38 jusqu'à être accueillis et immobilisés par les portions d'extrémité 38b. Les volets 28 pivotent autour des axes 30 de manière à occuper successivement leur position intermédiaire (représentée à la figure 5) puis leur position rapprochée (représentée à la figure 6).

Lorsque l'installateur souhaite accroitre la section de passage d'air, et par suite le débit d'air s'écoulant dans le conduit aéraulique, celui-ci entraine la bague 34 en rotation autour de l'axe 24 dans un sens S2 opposé au sens S1.

Les doigts 32 sont alors libérés par les portions d'extrémité 38b et coulissent à l'intérieur des lumières 38 jusqu'à être accueillis et immobilisés par les portions d'extrémité 38b. Les volets 28 pivotent autour des axes 30 de manière à occuper successivement leur position intermédiaire (représentée à la figure 5) puis leur position rapprochée (représentée à la figure 6).

Comme il va de soi, l'invention ne se limite pas à la seule forme d'exécution du dispositif décrite ci-dessus à titre d'exemple, elle en embrasse au contraire toutes les variantes de réalisation.

Dans une variante, inversement à ce qui a été décrit, la bague peut être pourvue d'un organe d'entrainement mâle et chaque volet peut être pourvu d'un organe d'entrainement femelle. Ces moyens d'entrainement mâle et femelle sont agencés de telle sorte qu'en réponse à un pivotement de la bague sur le corps, le moyen d'entrainement mâle coopère avec le moyen d'entrainement femelle pour modifier la position de chaque volet, et par suite la section de passage d'air.

Dans une autre variante, la bague et le corps présentent des moyens d'indexage complémentaires adaptés pour accueillir, et immobiliser, la bague dans trois positions prédéterminées relativement au corps, correspondant aux positions écartée, intermédiaire et rapprochée des volets.

Par exemple, les moyens d'indexage comprennent une pluralité de crans ménagés sur une face intérieure de la bague. Ces crans sont agencés pour coopérer avec au moins un bossage ménagé sur le corps.

## Revendications

1. Dispositif (20) pour ajuster un débit d'air s'écoulant dans un conduit aéraulique, comportant :
- un corps (22) tubulaire s'étendant selon un axe (24), destiné à être fluidiquement raccordé au conduit aéraulique ;
- une bague (34) montée pivotante sur une portion d'extrémité (22b) du corps (22) autour de l'axe (24) de ce corps;
**caractérisé en ce qu'**au moins un volet (28) s'étend à l'intérieur du corps (22) et est apte à pivoter autour d'un axe (30) transversal à l'axe (24) du corps (22), pour occuper une pluralité de positions correspondant à une pluralité de sections de passage d'air, chaque volet (28) étant pourvu d'un moyen d'entrainement mâle, et la bague (34) étant pourvue d'un moyen d'entrainement femelle, ou inversement,
le moyen d'entrainement mâle et le moyen d'entrainement femelle étant agencés de telle sorte qu'en réponse à un pivotement de la bague (34) sur le corps (22), le moyen d'entrainement mâle coopère avec le moyen d'entrainement femelle pour modifier la position de chaque volet (28), et par suite la section de passage d'air.

2. Dispositif (20) selon la revendication 1, **caractérisé en ce que** chaque volet (28) est pourvu du moyen d'entrainement mâle, et la bague (34) est pourvue du moyen d'entrainement femelle.

3. Dispositif (20) selon l'une quelconque des revendications 1 ou 2, **caractérisé en ce que** l'axe (30) de pivotement de chaque volet (28) s'étend au niveau une portion d'extrémité amont (22a) du corps, dans le sens d'écoulement d'air, et les moyens d'entrainement mâle et femelle sont disposés au niveau d'une portion d'extrémité aval (22b).

4. Dispositif (20) selon l'une quelconque des revendications 1 à 3, **caractérisé en ce que** le moyen d'entrainement mâle comprend un doigt (32), le moyen d'entrainement femelle comprend une patte (36) s'étendant dans un plan transversal à l'axe (24) du corps et dans laquelle est ménagée une lumière (38) en C adaptée pour recevoir le doigt (32).

5. Dispositif (20) selon la revendication 4, **caractérisé en ce que** la lumière (38) présente deux portions d'extrémité (38a, 38b) conformées pour accueillir, et immobiliser, le doigt (32).

6. Dispositif (20) selon l'une quelconque des revendications 1 à 5, **caractérisé en ce que** chaque volet (28) vient de moulage avec le corps (22), et **en ce que** chaque volet (28) présente un amincissement de matière définissant l'axe (30) de pivotement de ce volet (28).

7. Dispositif (20) selon l'une quelconque des revendications 1 à 6, caractérisé en ce le corps (22) est pourvu d'un organe d'encliquetage mâle (26) et la bague (34) est pourvue d'un organe d'encliquetage femelle (40), ou inversement, les organes d'encliquetage mâle (26) et femelle (40) étant conçus pour interdire la translation axiale de la bague (34) sur le corps (22), et autoriser le pivotement de la bague (34) sur le corps (22).

8. Dispositif (20) selon l'une quelconque des revendications 1 à 7, **caractérisé en ce que** la bague (34) et le corps (22) présentent des moyens d'indexage complémentaires, tels que des bossages et crans, adaptés pour accueillir, et immobiliser, la bague (34) dans au moins une position prédéterminée relativement au corps (22).

9. Dispositif (20) selon l'une quelconque des revendications 1 à 8, **caractérisé en ce que** la bague (34) présente une face extérieure cannelée.

10. Dispositif (20) selon l'une quelconque des revendications 1 à 9, caractérisé en ce la bague (34) présente un diamètre extérieur sensiblement égal au diamètre extérieur du corps (22), et de préférence un diamètre intérieur sensiblement égal au diamètre intérieur du corps (22).

11. Dispositif (20) selon l'une quelconque des revendications 1 à 10, **caractérisé en ce qu'**il comporte une chambre souple (44) agencée pour se gonfler, ou se dégonfler, en fonction de la différence de pression entre les portions d'extrémité amont (22a) et aval (22b) du corps (22).

## Patentansprüche

1. Einrichtung (20) zum Einstellen einer Luftdurchflussmenge innerhalb eines Luftrohres, umfassend:
- einen rohrförmigen Körper (22), der sich entlang einer Achse (24) erstreckt, der dazu bestimmt ist, fluidisch an das Luftrohr angeschlossen zu werden;
- einen Ring (34), der auf einem Endabschnitt (22b) des Körpers (22) rund um die Achse (24) dieses Körpers drehbar angebracht ist;
**dadurch gekennzeichnet, dass** sich mindestens eine Klappe (28) im Inneren des Körpers (22) erstreckt und fähig ist, sich um eine Achse (30) zu drehen, die quer zur Achse (24) des Körpers (22) verläuft, um eine Vielzahl von Positionen einzunehmen, die einer Vielzahl von Luftdurchgangsquerschnitten entsprechen, wobei jede Klappe (28) mit einem männlichen Antriebsmittel versehen ist und der Ring (34) mit einem weiblichen Antriebsmittel versehen ist, oder umgekehrt,
wobei das männliche Antriebsmittel und das weibliche Antriebsmittel so angeordnet sind, dass als Reaktion auf eine Drehung des Ringes (34) auf dem Körper (22) das männliche Antriebsmittel mit dem weiblichen Antriebsmittel zusammenwirkt, um die Position jeder Klappe (28) und folglich den Luftdurchgangsquerschnitt zu ändern.

2. Einrichtung (20) nach Anspruch 1, **dadurch gekennzeichnet, dass** jede Klappe (28) mit dem männlichen Antriebsmittel versehen ist und der Ring (34) mit dem weiblichen Antriebsmittel versehen ist.

3. Einrichtung (20) nach einem der Ansprüche 1 oder 2, **dadurch gekennzeichnet, dass** sich die Achse (30) für die Drehung jeder Klappe (28), in Luftdurchflussrichtung, auf Höhe eines stromaufwärts befindlichen Endabschnitts (22a) des Körpers erstreckt, und das männliche und weibliche Antriebsmittel auf Höhe eines stromabwärts befindlichen Endabschnitts (22b) angeordnet sind.

4. Einrichtung (20) nach einem der Ansprüche 1 bis 3, **dadurch gekennzeichnet, dass** das männliche Antriebsmittel einen Finger (32) umfasst, das weibliche Antriebsmittel eine Lasche (36) umfasst, die sich in einer quer zu der Achse (24) des Körpers verlaufenden Ebene erstreckt und in der eine Ausnehmung (38) in C-Form eingerichtet ist, die zum Aufnehmen des Fingers (32) angepasst ist.

5. Einrichtung (20) nach Anspruch 4, **dadurch gekennzeichnet, dass** die Ausnehmung (38) zwei Endabschnitte (38a, 38b) aufweist, die ausgebildet sind, um den Finger (32) aufzunehmen und zu fixieren.

6. Einrichtung (20) nach einem der Ansprüche 1 bis 5, **dadurch gekennzeichnet, dass** jede Klappe (28) durch Formgießern mit dem Körper (22) hergestellt ist, und dadurch, dass jede Klappe (28) eine Materialverjüngung aufweist, die die Achse (30) für die Drehung dieser Klappe (28) definiert.

7. Einrichtung (20) nach einem der Ansprüche 1 bis 6, **dadurch gekennzeichnet, dass** der Körper (22) mit einem männlichen Einrastelement (26) versehen ist und der Ring (34) mit einem weiblichen Einrastelement (40) versehen ist, oder umgekehrt, wobei das männliche (26) und weibliche (40) Einrastelement ausgestaltet sind, die axiale Verschiebung des Ringes (34) auf dem Körper (22) zu unterbinden und die Drehung des Ringes (34) auf dem Körper (22) zuzulassen.

8. Einrichtung (20) nach einem der Ansprüche 1 bis 7, **dadurch gekennzeichnet, dass** der Ring (34) und der Körper (22) komplementäre Ausrichtungsmittel, wie etwa Erhöhungen und Rasten, aufweisen, die angepasst sind, um den Ring (34) in mindestens einer vorbestimmten Position in Bezug auf den Körper (22) aufzunehmen und zu fixieren.

9. Einrichtung (20) nach einem der Ansprüche 1 bis 8, **dadurch gekennzeichnet, dass** der Ring (34) eine gefurchte Außenfläche aufweist.

10. Einrichtung (20) nach einem der Ansprüche 1 bis 9, **dadurch gekennzeichnet, dass** der Ring (34) einen Außendurchmesser aufweist, der im Wesentlichen gleich ist wie der Außendurchmesser des Körpers (22), und vorzugsweise einen Innendurchmesser, der im Wesentlichen gleich ist wie der Innendurchmesser des Körpers (22).

11. Einrichtung (20) nach einem der Ansprüche 1 bis 10, **dadurch gekennzeichnet, dass** sie eine biegsame Kammer (44) umfasst, die angeordnet ist, um in Abhängigkeit von der Druckdifferenz zwischen dem stromaufwärts (22a) befindlichen und dem stromabwärts (22b) befindlichen Endabschnitt des Körpers (22) anzuschwellen oder abzuschwellen.

## Claims

1. A device (20) for adjusting an air flow rate flowing in an air duct, including:
- a tubular body (22) extending along an axis (24), intended to be fluidly connected to the air duct;
- a ring (34) pivotally mounted on an end portion (22b) of the body (22) about the axis (24) of this body;
**characterized in that** at least one flap (28) extends within the body (22) and is able to pivot about an axis (30) transverse to the axis (24) of the body (22), to occupy a plurality of positions corresponding to a plurality of air passage sections, each flap (28) being provided with a male drive means, and the ring (34) being provided with a female drive means, or vice versa,
the male drive means and the female drive means being arranged such that, in response to a pivoting of the ring (34) on the body (22), the male drive means cooperates with the female drive means in order to change the position of each flap (28), and as a result the air passage section.

2. The device (20) according to claim 1, **characterized in that** each flap (28) is provided with the male drive means, and the ring (34) is provided with the female drive means.

3. The device (20) according to any one of claims 1 or 2, **characterized in that** the pivot axis (30) of each flap (28) extends at an upstream end portion (22a) of the body, in the air flowing direction, and the male and female drive means are disposed at a downstream end portion (22b).

4. The device (20) according to any one of claims 1 to 3, **characterized in that** the male drive means comprises a finger (32), the female drive means comprises a tab (36) extending in a plane transverse to the axis (24) of the body and in which is formed a C-shaped light (38) adapted to receive the finger (32).

5. The device (20) according to claim 4, **characterized in that** the light (38) has two end portions (38a, 38b) shaped to accommodate and immobilize the finger (32).

6. The device (20) according to any one of claims 1 to 5, **characterized in that** each flap (28) is integrally molded with the body (22), and **in that** each flap (28) has a thinning of material defining the pivot axis (30) of this flap (28).

7. The device (20) according to any one of claims 1 to 6, **characterized in that** the body (22) is provided with a male ratchet member (26) and the ring (34) is provided with a female ratchet member (40), or vice versa, the male (26) and female (40) ratchet members being designed to prohibit the axial translation of the ring (34) on the body (22), and allow the ring (34) to pivot on the body (22).

8. The device (20) according to any one of claims 1 to 7, **characterized in that** the ring (34) and the body (22) have complementary indexing means, such as bosses and notches, adapted to accommodate and immobilize the ring (34) in at least one predetermined position relative to the body (22).

9. The device (20) according to any one of claims 1 to 8, **characterized in that** the ring (34) has a fluted outer face.

10. The device (20) according to any one of claims 1 to 9, **characterized in that** the ring (34) has an outer diameter substantially equal to the outer diameter of the body (22), and preferably an inner diameter substantially equal to the inner diameter of the body (22).

11. The device (20) according to any one of claims 1 to 10, **characterized in that** it includes a flexible chamber (44) arranged to inflate or deflate, depending on the difference in pressure between the upstream (22a) and downstream (22b) end portions of the body (22).
